(19) Europäisches Patentamt

European Patent Office

Office européen des brevets

(11) **EP 3 512 120 A1**

(12) **EUROPEAN PATENT APPLICATION**

(43) Date of publication:
**17.07.2019   Bulletin 2019/29**

(51) Int Cl.:
***H04B 7/155*** (2006.01)

(21) Application number: **19158708.8**

(22) Date of filing: **07.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**13002430.0 / 2 802 089**

(71) Applicant: **Andrew Wireless Systems GmbH 86675 Buchdorf (DE)**

(72) Inventors:
• **BRAZ, Oliver**
**86653 Monheim (DE)**

• **HANSON, Van**
**Forest, VA 24551 (US)**
• **MACA, Gregory**
**Lynchburg, VA 24502 (US)**

(74) Representative: **FDST Patentanwälte Nordostpark 16 90411 Nürnberg (DE)**

Remarks:
This application was filed on 22.02.2019 as a divisional application to the application mentioned under INID code 62.

(54) **REPEATER FOR A WIRELESS COMMUNICATION NETWORK**

(57)      A repeater (1, 21, 29, 30, 32, 33, 34) for a wireless communication network is described, the repeater (1, 21, 29, 30, 32, 33, 34) comprising a donor side (3), a coverage side (6), a control unit (8, 11, 12) and a signal line between the donor side (3) and the coverage side (6) for repeating a downlink-signal from the donor side (3) to the coverage side (6) and for repeating an uplink-signal from the coverage side (6) to the donor side (3), wherein at least at one of the donor side (3) and the coverage side (6) the signal line is coupled with an adaptive antenna (19, 23, 36, 43), wherein at least one of the beam pattern characteristics of the at least one antenna (19, 23, 36, 43) is adjustable, and wherein the control unit (8, 11,12) is configured to adjust the at least one adjustable beam pattern characteristic of the antenna (19, 23, 36, 43), wherein the repeater (1, 21, 29, 30, 32, 33, 34) further comprises signal quality measurement means (9) for indicating the signal quality of at least one received signal, wherein the control unit (8, 11,12) is further configured to adjust the at least one of the beam pattern characteristics of the at least one antenna (19, 23, 36, 43) based on the indicated signal quality of the at least one received signal.

**Figure 1**

EP 3 512 120 A1

**Description**

The idea disclosed relates to a repeater for a wireless communication network, the repeater comprising a coverage side, a donor side, a control unit and a signal line between the coverage and the donor side for repeating a downlink-signal (DL) from the donor side to the coverage side and for repeating an uplink-signal (UL) from the coverage side to the donor side, wherein at least at one of the donor side and the coverage side the signal line is coupled with an antenna. The idea disclosed also relates to a wireless communication network comprising at least one aforementioned repeater and a base station, wherein the base station comprises an antenna for receiving the uplink-signal from the repeater and/or for emitting the downlink-signal to the repeater. The idea disclosed further relates to a wireless communication network comprising in a multi-hop configuration or in a cognitive radio configuration a multiple of the aforementioned repeaters, wherein the signal line of the repeaters is coupled at the donor side with a first antenna and at the coverage side with a second antenna.

The idea disclosed particularly deals with the problem that the demand for mobile data traffic is still increasing even though radio resources are very limited. This has led to an intensive research for using the available wireless communication spectrum more efficiently.

One possibility to use the spectrum more efficiently is to take advantage of the spatial diversity of the radio channel by deploying multiple in and multiple out (MIMO) antenna techniques as it described for example in G. J. Foschini and M. J. Gans, "On limits of wireless communications in a fading environment when using multiple antennas", Wireless Personal Communication, vol. 6, pp. 311-335, Mar. 1998.

Another approach according to M. Mück et al., "ETSI reconfigurable radio systems: status and future directions on software defined radio and cognitive radio standards", IEEE Communications Magazine, Sept. 2010, S. 78-86, is to offload the crowded communication bands by utilizing ineffectively used TV bands (the so-called "White Spaces")

A third possibility is to sub-divide the coverage area in many small areas (small cells) by either reducing the transmit power ($P_{Tx}$) or shifting to higher frequencies thereby exploiting the with the frequency increasing propagation loss ($L_{path}$). An additional positive effect of the last mentioned method is that higher carrier frequencies usually provide a larger (relative) bandwidth. Wireless Local Area networks in the 2.4 GHz range for example are allowed to use the spectrum from 2.4 to 2.4835 GHz (ETSI EN 300 328-2), i.e. a bandwidth of 83.5 MHz only. Whereas in the 5 GHz band frequencies from 5.2 up to 5.8 GHz, resulting in a bandwidth of 600 MHz, can be used. When taking into account so called ultra wide-band systems (UWB), currently developed at 8 GHz and 60 GHz, a bandwidth of several GHz will be available. The same applies for mobile communication frequencies. Accordingly, it has recently been decided to extend the mobile carrier frequencies beyond 3 GHz as well.

On the one hand, a decreased coverage area (due to the increased propagation loss) is desired to deploy plenty of small isolated cells, but on the other hand, it gets more complicated to distribute the signals throughout the network. This issue gets even worse when data services are used in addition to voice services. Depending on the intended data throughput, a significantly higher signal to noise and interference ratio (SNIR) is required. Whereas usually 6 to 10 dB are sufficient to establish a voice call with a reasonable quality (e.g. the bit error rate (BER) is less than $10^{-3}$),, a significant higher SNIR is required for high speed data links like GPRS as it is described in Anders Furuskär, Sara Mazur, Frank Müller, Håkan Olofsson; "EDGE: Enhanced data rates for GSM and TDMA/136 evolution", IEEE Personal Communications, vol. 6, pp. 56 - 66, June 1999. Since nowadays the spatial diversity of the radio channel is exploited by MIMO technologies, by deploying multiple antennas on the transmitting and the receiving side, the SNIR requirements get even more stringent. As particularly known from S. Catreux, et al., "Adaptive Modulation and MIMO Coding for Broadband Wireless Data Networks", IEEE Communications Magazine, pp. 108-115, June 2002, at least 30 dB of SNIR is required to achieve the full data rate in a 2x2 MIMO system under best channel conditions. Consequently, at least 20 dB improvement is necessary with respect to the legacy voice call based radio coverage planning. Assuming 4x4 or 8x8 MIMO schemes in the next generation communication standards, even higher SNIR requirements are needed.

With respect to utilizing the existing radio spectrum most efficiently, data oriented communication systems like Long Term Evolution (LTE) or High Speed Packet Access (HSPA or HSPA+) rely on partial or full frequency reuse schemes with hard handover (HO) mechanisms. Based on the signal quality, (e.g. the signal strength ratio between the currently used signal of a serving cell base transceiver station (BTS) and the signal strength of an interfering adjacent cell BTS), at a certain point the communication link is switched from the one BTS to a second BTS. Since these handover areas usually are located between two BTS's, where the signal level at the cell edge is low, the reduced SNIR is also reducing the available capacity.

In summary, it has to be noticed that next generation mobile communication systems will have to rely on significantly higher SNIR values in a large number of licensed and unlicensed spectrum ranges with a tendency to utilize higher carrier frequencies. Enhanced hard HO, as well as high frequency re-using schemes, required for small cell solutions, will have to mainly rely on sharp cell edge conditions, i.e. interference free radio coverage throughout its boundaries. With respect to the wireless attachment of small cells, e.g. hotspots, it also would be appreciated to route radio signals through or around existing cells without causing, or at least minimizing interference.

For delivering wireless signals to passengers on board of a vehicle, like a train or a bus, there are five additional technical key challenges which have to be addressed.

The first issue is to enhance the mobile network coverage to the rail or road corridor when the vehicle passes through underserved areas and to overcome the differing degree of signal attenuation through vehicles. The second challenge is related to the installation of on-train or on-bus active equipment, such as repeaters or gateways, for a mobile in-carriage signal enhancement. Since these devices have to be supported by passive equipment such as housings, wiring and interfaces, the strict space, weight and shortened power consumption constraints imposes many restrictions. However, it is the only technical way to overcome serious attenuation of mobile signals by the train or bus carriage walls and windows. As more modern trains and buses, which use metalized thermal protection glasses, are progressively introduced into the fleets, this attenuation problem will increase.

One potential way to improve the SNIR along the trackside could be to place more BTS's. However to enhance the signal level by 20 dB (compared to e.g. GSM 1800) would require ~ 9 additional eNode B's (or BTS's respectively) between two existing BTS's. With a current voice call based coverage the planning distance is 3-5 km. Consequently the required eNode B's separation would shrink to as little as 300 to 500 m. Assuming that for safety reasons the minimum distance between two trains, at a velocity of 160 km/h, shall not be less than 5 km, this would result in a 90% idle operation for each BTS, which from a cost point of view is assumed to be not acceptable.

The third task which has to be addressed is caused by the relative velocity of mobile systems with respect to the serving BTS's, resulting in a Doppler shift of the frequency. The Doppler frequency shift ($f_d$) can be calculated as,

$$f_d = \frac{v}{c} \cdot f \cdot \cos(\Theta) \ \ \text{(Equation 1),}$$

where $v$ is the velocity of the receiver in m/s, $c$ is the velocity of light ($3 \times 10^8$ m/s), $f$ is the emitted frequency of transmitter, and $\theta$ is the angle between the receivers forward direction and the line of sight (LOS) from the transmitter to the receiver. It is well known that high speed radio links without sophisticated correction algorithms are quite sensitive to Doppler shift. The SNIR requirements strongly increase with the velocity.

The fourth issue is originated in the sharing of capacity with "other" users not on the mobile system (e.g. an in-train system), which will reduce the communication capacity within the vehicle. This is especially relevant in a dense urban area, where the regular macro network is also covering the area of the mobile system like a railway track. The customers in the moving system, like in a train, are representing a moving hotspot. If this hotspot moves from a dedicated to a nondedicated cell, the available capacity has to be shared, resulting in a capacity reduction for customers on-board, as the scheduler of the network, like LTE, is not able to distinguish between the regular and the mobile in-train customers. Consequently, dedicated rail track coverage would be the preferred solution, like a signal distribution through a low loss transport media (e.g. a fiber optical waveguide) to a distributed antenna system (DAS). However, this solution would require the network operators having access to the rail track sites, which for ownership and security reasons is difficult to achieve and/or guarantee.

The fifth problem relates to the given issue, that a large group of fast moving users collectively have to be handed over from one stationary serving cell to another. Boosted by the aforementioned hard HO schemes used in high data rate communication standards, it becomes clear that fast handover is even more challenging.

US 2008/0225931 A1 discloses a repeater for a wireless communication network, the repeater comprising a metric module configured to perform calculations for weights used by the repeater, and to generate a composite metric derived from metric execution, and an adaptive antenna array cooperating with the metric module to condition signals as part of the calculating the composite metric. By optimizing the array weighting settings the repeater performance, in particular the interference cancellation (or isolation), can be enhanced.

In US 2010/0234071 A1 a vehicle integrated communications system is described that provides a solution to poor performance experienced at the cell edge in a cellular communications system due to weak signal strength and high interference levels. Multiple antennas in the body of the vehicles are coupled to a multi-antenna transceiver. Multi-antenna techniques such as MIMO, beamforming and spatial multiplexing are proposed. Beamforming is used to increase the signal gain by constructive combining.

US 2010/0284446 A1 discloses a multi-hop repeater chain configured for MIMO operation.

It is one object of the idea disclosed to overcome the above mentioned problems, in particular to improve the insufficient SNIR, the insufficient cell edge power profile shaping and missing routing functions in stationary and especially in mobile applications.

According to a first subject of the idea disclosed, a repeater for a wireless communication network is provided, the repeater comprising a coverage side, a donor side, a control unit and a signal line between the coverage and the donor side for repeating a downlink-signal from the donor to the coverage side and for repeating an uplink-signal from the coverage to the donor side, wherein at least one of the donor side and the coverage side the signal line is coupled with an adaptive antenna, wherein at least one of the beam pattern characteristics of the adaptive antenna is adjustable, and wherein the control unit is configured to adjust the at least one adjustable beam pattern characteristic of the adaptive antenna based on location data of the repeater. Accordingly, it is a subject of the idea disclosed to deploy an off-the air repeater at the donor side and/or at the coverage side with a smart antenna, wherein at least one of the beam pattern characteristics of the smart antenna is adjustable, wherein at least one of the beam pattern characteristics of the smart antenna is adjusted according to the location data of the repeater.

According to another subject of the idea disclosed a wireless communication network is provided, the network comprising at least one of the aforementioned repeater and a base station, wherein also the base station comprises an adaptive antenna for receiving the uplink-signal from the repeater and/or for emitting the downlink-signal to the repeater, wherein at least one of the beam pattern characteristics of the base station antenna is adjustable, and wherein the base station is configured to receive the location data of the repeater and to adjust the at least one adjustable beam pattern characteristic of its antenna based on the location data of the repeater.

According to yet another subject of the idea disclosed a wireless communication network is provided, the network comprising in a multi-hop configuration or in a cognitive radio configuration a multiple of the aforementioned repeaters, the repeaters having the signal line coupled at the donor side with a first adaptive antenna and coupled at the coverage side with a second adaptive antenna.

In particular, the location data used for the adjustment of the at least one beam pattern characteristic of the at least one adjustable antenna are dynamically updated current location data of the repeater.

In one preferred embodiment an adaptive directional antenna is used, wherein at least the angle beam pattern characteristics of the at least one antenna is adjustable. According to another embodiment of the idea disclosed the repeater is further comprising signal quality measurements means for indicating the signal quality of at least one received signal, in particular RSSI (Receive Signal Strength Indicator) means for indicating at least the signal strength of the received downlink-signal, wherein the control unit is further configured to adjust the at least one of the beam pattern characteristics of the at least one antenna based on the indicated signal quality, in particular the signal strength, of the received downlink-signal. In a second embodiment uplink RSSI based adjustment of the at least one coverage side antenna beam pattern is feasible as well.

With regard to the location data, a navigation system sensor, in particular a GPS sensor, being coupled with the repeater, in particular with the control unit of the repeater, could be implemented, wherein as location data the current location data of the repeater are received from said navigation system sensor.

According to yet another embodiment the repeater or the control unit respectively being further configured to receive adjustment information of the at least one of the beam pattern characteristics for the least one antenna from a database, the received adjustment information being responsive to the location data of the repeater.

In another advantageous embodiment the repeater is further comprising a modem interface port, where the control unit is being further configured to provide the indicated signal quality and/or the current location data of the repeater a database.

According to yet another embodiment the repeater being further configured to receive adjustment information for the at least one of the beam pattern characteristics of the at least one antenna from a database, the received adjustment information being responsive to the location data, in particular the current location data of the repeater.

In another advantageous embodiment the repeater is further comprising a spectrum analyzer for analyzing the spectrum currently used for the wireless communication and/or spectral ranges outside the band allocated for mobile communication. As a result of such analysis the repeater could obtain information about the actual spectrum utilization as well as information about interference issues originated from other in-band or out-of-band services. Such information could be used in a cognitive radio system to off-load wireless traffic to unused spectrum ranges like locally unused TV carriers (White spaces). Communication signals typically contain pilot sequences or dedicated pilot carriers. Such pilot signals could be analyzed and be compared with predefined standard information. This comparison could be utilized to obtain deviations from the planned frequency. The repeater may further comprise a frequency shifting means for shifting the frequency of the repeated signals, the control unit being further configured to report the analyzed spectrum information together with the current location data of the repeater to a central database, for receiving from the central database a frequency band available for the wireless communication of the repeater and for controlling the frequency shifting means to shift the frequencies of the repeated signals to the received frequency band.

In another configuration, the repeater is further comprising distance means for calculating a distance and/or the direction of at least one donor emitting the received downlink-signal or receiving the emitted up-link-signal and/or at least one user (5) emitting the received up-link signal or receiving the emitted down-link signal in relation to the repeater respectively based on location data of the donor and based on the current location data of the repeater, wherein the means are coupled with the control unit, and wherein the control unit is configured to adjust the at least one of the beam pattern characteristics of the at least one antenna based on the calculated distance and/or direction. According to a first improvement, the control unit is configured to determine from a change of the calculated distance and/or direction in time a current relative velocity between the donor and/or user and the repeater and wherein the control unit is configured to adjust the at least one of the beam pattern characteristics of the adaptive antenna based on the determined current relative velocity. According to another improvement the control unit is further configured to compare a multiple of calculated current velocities relative to a multiple of donors and/or users and to adjust the at least one of the beam pattern characteristics of the at least one antenna in advance to an awaited next donor and/or user thereby improving the handover between different donors and/or different users.

Having determined the current relative velocity between the repeater and a respective donor cell and/or user cell, it will be possible to correct the Doppler shift in the transceived signals thereby increasing the performance of the repeater. The Doppler shift may be, additionally or alternatively determined by utilizing a pilot frequency shift derived from a spectrum analyzer as described above or any other onboard navigation system like a digital compass where an accelerometer could be utilized. In yet another embodiment of the repeater, the control unit accordingly is further configured to control the frequency shifting means for a Doppler shift correction based on the determined current relative velocity.

In a further advantageous embodiment of the repeater the signal line is coupled at the donor side with a first adaptive antenna for receiving a downlink signal and for emitting an uplink-signal and is coupled at the coverage side with a second adaptive antenna for receiving the uplink-signal and/or for emitting the downlink-signal, wherein at least one of the beam pattern characteristics of the first and of the second antenna is adjustable, and wherein the control unit is further configured to adjust the at least one adjustable beam pattern characteristic of the first and the second antenna based on the current location data of the repeater.

As the first and/or as the second antenna a multiple beam antenna, in particular an antenna array, is comprised. The control unit in particular is further configured to adjust the at least one adjustable beam pattern characteristic of the multiple beam antenna for each of the multiple beams separately.

In addition to what has been said above, further advantageous aspects and preferred embodiments of the invention are as follows:

1. A repeater for a wireless communication network, the repeater comprising a donor side, a coverage side, a control unit and a signal line between the donor side and the coverage side for repeating a downlink-signal from the donor side to the coverage side and for repeating an uplink-signal from the coverage side to the donor side, wherein at least at one of the donor side and the coverage side the signal line is coupled with an adaptive antenna, wherein at least one of the beam pattern characteristics of the at least one antenna is adjustable, and wherein the control unit is configured to adjust the at least one adjustable beam pattern characteristic of the antenna based on location data of the repeater.

2. A repeater according to number 1, wherein the at least one antenna is an adaptive directional antenna and wherein at least the angle beam pattern characteristic of the at least one antenna is adjustable.

3. A repeater according to number 1 or 2, further comprising signal quality measurement means (9) for indicating the signal quality of at least one received signal, wherein the control unit (8, 11, 12) is further configured to adjust the at least one of the beam pattern characteristics of the at least one antenna (19, 23, 36, 43) based on the indicated signal quality of the at least one received signal.

4. A repeater according to any of the numbers 1 to 3, further being designed to be connected to a navigation system sensor, wherein the location data of the repeater are current location data derived from the navigation system sensor.

5. A repeater according to number 3 or 4, further comprising a modem interface port, where the control unit being further configured to provide the indicated signal quality and/or the current location data of the repeater to a database.

6. A repeater according to any of the numbers 1 to 5, the repeater being further configured to receive adjustment information for the at least one of the beam pattern characteristics of the at least one antenna from a database, the received adjustment information being responsive to the location data of the repeater.

7. A repeater according to any of the numbers 1 to 6, further comprising a frequency shifting means for shifting the frequency of the repeated signal on instruction.

8. A repeater according to any of the numbers 1 to 7, further comprising means for calculating a distance and/or the direction of at least one donor emitting the received down-link signal or receiving the emitted up-link signal and/or at least one user emitting the received up-link signal or receiving the emitted down-link signal in relation to the repeater based on location data of the at least one donor and based on the current location data of the repeater, wherein the means are coupled with the control unit, and wherein the control unit is configured to adjust the at least one of the beam pattern characteristics of the at least one antenna based on the calculated distance and/or based on the calculated direction.

9. A repeater according to number 8, wherein the control unit is further configured to compare a multiple of calculated distances and/or a multiple of calculated directions relative to a multiple of donors and/or users and to adjust the at least one of the beam pattern characteristics of the at least one antenna in advance to an awaited next donor and/or user, thereby improving the handover between different donors and/or users.

10. A repeater according to any of the numbers 1 to 9, wherein as the at least one antenna a multiple beam antenna, in particular an antenna array, is comprised.

11. A repeater according to number 10, wherein the control unit (8, 11, 12) is further configured to adjust the at least one adjustable beam pattern characteristic of the multiple beam antenna for each of the multiple beams separately.

12. A wireless communication network comprising at least one repeater according to any of the numbers 1 to 11 and a base station, wherein the base station comprises a third adaptive antenna for receiving the uplink-signal from the repeater and/or for emitting the downlink-signal to the repeater, wherein at least one of the beam pattern characteristics of the third antenna is adjustable, and wherein the base station is configured to receive the location data of the repeater and to adjust the at least one adjustable beam pattern characteristic of the third antenna based on the location data of the repeater.

13. A wireless communication network according to number 12, wherein the base station is connected to a donor repeater comprising an adaptive antenna for receiving the uplink-signal from the repeater and/or for emitting the downlink-signal to the repeater, wherein at least one of the beam pattern characteristics of the adaptive antenna of the donor repeater is adjustable, and wherein the donor repeater is configured to receive the location data of the repeater and to adjust the at least one adjustable beam pattern characteristic of the adaptive antenna (35) of the donor repeater based on the location data of the repeater.

14. A wireless communication network comprising in a multi-hop configuration with a multiple of repeaters, having the signal line coupled at the donor side with a first adaptive antenna and coupled at the coverage side with a second adaptive antenna according to any of the numbers 1 to 11.

15. A wireless communication network comprising in a cognitive radio configuration a multiple of repeaters, having the signal line coupled at the donor side with a first adaptive antenna and coupled at the coverage side with a second adaptive antenna according to any of the numbers 1 to 11.

The following description and the annexed drawings set forth in detail certain illustrative aspects of the subject matter. These aspects are indicative, however, of but a few of the various ways in which the subject matter can be employed. The claimed subject matter is intended to include all such aspects and their equivalents. The idea disclosed however should not be limited by the specific details and aspects and combinations of details and aspects as shown in the drawings.

FIG. 1   is a schematic view of a RF-repeater
FIG. 2   is a schematic view of an exemplary coverage area of conventionally used antennas.
FIG. 3   is a schematic view of an exemplary outdoor hotspot binding scene where a serving cell and a repeater both are coupled via directional antennas.
FIG. 4   shows an exemplary wireless communication network comprising in a multi-hop configuration a multiple of repeaters with directional antennas.
FIG. 5   is a schematic view of an exemplary stationary shielded cell binding scene, where an indoor repeater is coupled with a directional antenna to an outdoor serving cell and transceives signals to an indoor DAS.
FIG. 6   is a schematic view of an exemplary mobile binding scene, where an on-train repeater is coupled with a directional antenna to a stationary outdoor serving cell and transceives signals to in-train cells.
FIG. 7   is a schematic view of an exemplary mobile binding scene explaining the handover between two stationary outdoor serving cells.

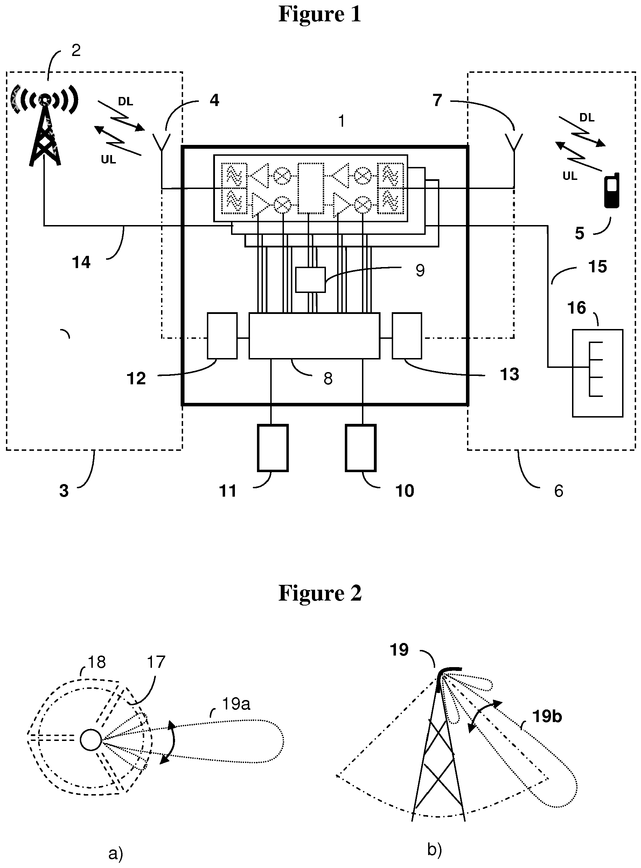

As depicted in Figure 1 wireless coverage is often provided by a RF repeater 1, that receives downlink signals in at least one frequency range from one or more BTS's or other repeaters 2 n its donor side 3 via a donor antenna 4. The at least one signal is filtered, amplified, and then retransmitted to users or other repeaters 5 on its coverage side 6 via the coverage antenna 7. The complementary function is performed in the uplink direction, i.e. receiving at least one signal from at least one mobile user or other repeater 5 on the coverage side 6, amplifying, filtering the signal, and transmitting it back to the serving BTS or repeater on the donor side 3. For adjusting and controlling the repeater's transceiving parameters, like the gain or the filtering characteristics, the repeater 1 usually is equipped with a control unit 8. This control unit 8 could interface to a signal measurement device 9, where signal quality parameters are derived from at least one received signal. For remote control or information exchange the control unit 8 could be connected to an external or internal modem 10. To obtain location related information the control unit 8 may be connected to an external or internal navigation system 11 as well. The repeater 1 further may comprise a donor antenna control unit 12 and a coverage control unit 13. It should be noted that the repeater 1 in all or just one band could be attached to the serving BTS or repeater 2 on the donor side 3 by a wired donor connection 14 as well. This concept in the following is referred to as a donor repeater. In many cases, on the coverage side, the repeater 1 in at least one frequency band is attached via a wired coverage connection 15 to a distributed antenna system DAS 16.

According to Figure 2, antennas mostly used in indoor and mobile pick-up applications usually show vertical omni-directional antenna patterns 17. For a BTS signal distribution, sectorized (e.g. 120 °) antennas 18 are typically used. For dedicated links like a repeater-BTS connection a directional antenna 19 can be used for directing the power transmission or reception in the horizontal plane 19a and/or vertical plane 19b. A typical beam pattern of a directional antenna 19 is drawn.

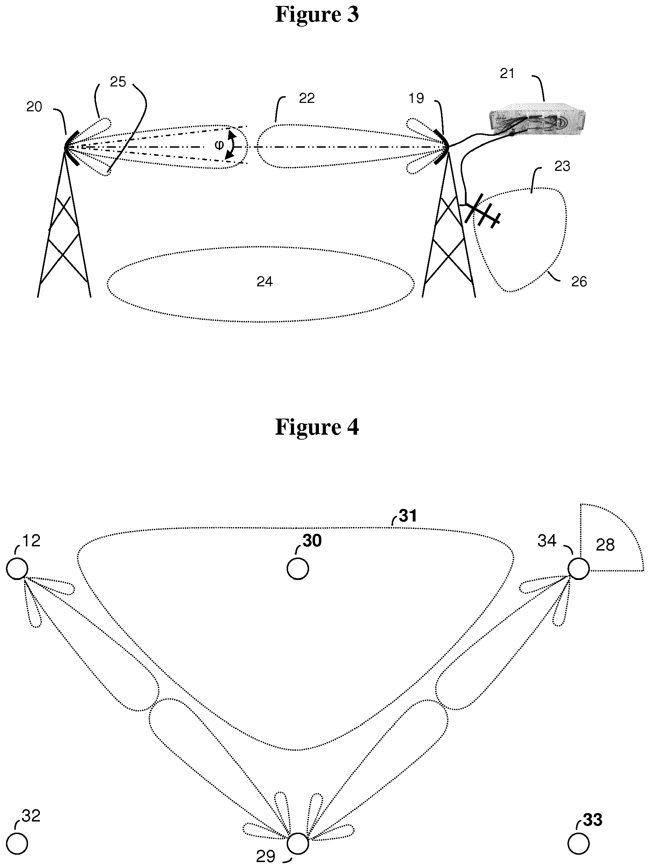

When a base station (BTS) 20 and a repeater 21 are both installed in fixed stationary locations as shown in Figure 3, static directional antennas 19 are often used to enhance the link quality between the base station 20 and repeater 21. This also enhances isolation between the donor beam 22 and the coverage area 23 of the repeater 21.

The idea disclosed in this context realizes that directional antennas become more interesting at higher transmitted frequencies due to the fact that the dimensions needed to achieve a high directivity shrink as frequencies increase. According to equation 1, the gain ($G$) of an antenna further is proportional to the square of the ratio of the aperture diameter ($D$) above of the wavelength ($\lambda$):

$$G \sim \left(\frac{D}{\lambda}\right)^2 \qquad \text{Equation 2}$$

The increased path loss insofar can be compensated by the use of high directional antennas at both ends of the radio link. However a disadvantage with respect to a mobile user is that in the same way the gain increases with the frequency that the angle $\varphi$ of the beam is decreasing according to equation 3.

$$\varphi \sim \left(\frac{\lambda}{D}\right) \qquad \text{Equation 3}$$

As a consequence, the characteristics of the antenna, pointing towards the other end of the radio link, would have to be adjusted with an increased accuracy, which especially on a hand-held mobile device would result in a lot of effort and cost. However, this disadvantage can be turned into an advantage in repeater applications. By installing antennas with an adjustable pattern, the coverage area can be shaped in the vertical and horizontal plane. As depicted in Figure 3 this could be used to enhance the frequency re-use factor.

High antenna directivity can be used to bridge a re-use area 24. Inevitable side lobs 25, causing interference in the re-use area 24, can be controlled by a careful antenna alignment (e.g. beam pattern nulling), by their design and by selecting an appropriate installation location. Hidden node locations (behind a building, a hill, etc.), usually seen as a problem in wireless networking, can effectively be utilized. It is therefore one aspect of the idea disclosed to adjust the beam pattern characteristics of an adjustable antenna 19 based on the current location data of the repeater 21, particularly on the current geographic data of the repeater 21.

For the same reason the isolation between the donor beam 22 and the coverage area 23 is increased by adjusting the beam pattern of the antenna 19 of the repeater 21 respectively. A coverage area 26 can be reused for the same frequencies. The coverage area 26 might be shapeable by using antennas with an adjustable tilt angle (mechanical or electrical). Accordingly the cell size and the location of the handover zones might be formable. Instead of a "simple" antenna as shown an outdoor distributed antenna system DAS 16 could be attached on the coverage side.

It is further advantageous to distribute the signal to several repeaters 29, 30, 32, 33 and 34 in parallel (e.g. broadcast mode) as shown in Figure 4, which depicts a multi-hop configuration of a multiple of repeaters 29, 30, 32, 33 and 34, each of them comprising an adjustable antenna on the donor and on the coverage side as well. By deploying repeaters 29, 30, 32, 33 and 34 with multiple adjustable high gain antennas (and adjustable coverage antennas) or multi-beam antennas, the data traffic can be flexibly routed from a source (repeater or BTS) 27 to the destination coverage area 28 via a multi-hop repeater network, when knowing the current location of each repeater. For this approach, at least the donor as well as the coverage side of repeaters 29, 30, 32 and 33 have to be equipped with adjustable antennas. Repeaters 29, 30, 32 and 33 do not have to be fixed installations. Temporarily installation could be deployed to bypass RF links around highly loaded cells, e.g. during a large event. Each repeater 29, 30, 32, 33 and 34 may have the further possibility to scan the spectrum in its near vicinity to check whether the range of frequencies is already in use (e.g. primary user). In case the desired band is occupied at the location of exemplary repeater 29, the traffic could be routed via the repeater 30. In case of too much interference (side lobes) being caused in the re-use area 31, the traffic might be routed via repeaters 32, 29, 33 towards 34. It is also possible to reduce effects of interference in the re-use area(s) by frequency shifting to unused bands or to use polarization diversity. Interference can be minimized by explicitly steering antenna pattern nulls as well. Also, beams might be steered to maximize the link quality of MIMO signals, where quality might mean optimizing spatial diversity to maximize data throughput. Assuming most mobiles do transmit and/or receive the signals with a vertical polarization, it might be advantageous to use a horizontal polarization for the signals on the repeater inter-connect link. To avoid mobiles located in the re-use area 31 becoming connected to the inter-connect link, it might be also advantageous to transmit the signals in reverse frequency position.

According to another embodiment each repeater is equipped with a spectrum analyzer (functionality), permanently scanning in its location area for other users (e.g. primary user) and reporting the results to a central cognitive or auction based data base, as it is discussed in Y. Zhang, et al., "Auction-Based Resource Allocation in Cognitive Radio Systems", IEEE Communications Magazine, November 2012, pp. 108 - 129. In return, the repeater shall be able to request part of the available spectrum for its own use from the data base.

Due to field strength restrictions in many countries, the maximum equivalent isotropically radiated power (EIRP) might be subjected to severe restrictions. This has to be considered when using high gain antennas in conjunction with high power BTS's. Since the antenna gains on both sides of a radio link can be summed, the best performance is obtained with directional antennas on both ends. However in case the EIRP limit is exceeded in one location, the gain on the other side can still be utilized.

It is further mentioned that multiple streams (MIMO) pointing to one location as well as pointing to different locations (Coordinated Multi Point - CoMP) can be also optimized with adjustable antenna patterns and with a multi-beam approach as well. In this respect it may be beneficial to exploit polarization effects by adjusting the oscillation plane of the electric field component. This may be performed by the mechanical tilting of several antennas or could be done by weighting the parameters of an antenna array. Especially for optimally utilizing the spatial diversity effect it has been shown that optimizing the polarization for several spatial streams individually, the data throughput can be increased, as it is shown in Braz, O., et al., "LTE amplify and forward relay for indoor coverage extension", Funkschau Heft 7 April 2009.

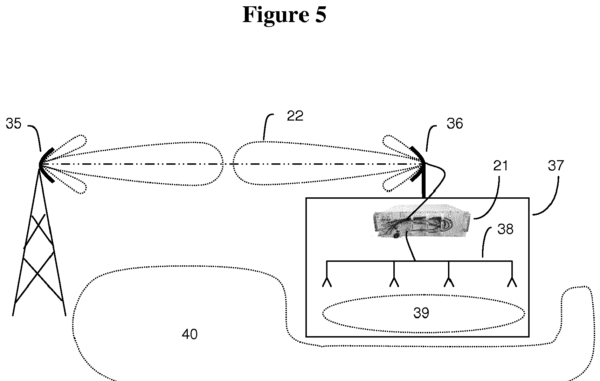

According to yet another embodiment of the idea disclosed a repeater 21 equipped with an adjustable antenna 36 can be applied to provide radio coverage in a shielded area as it is shown in Figure 5. Basically the same as mentioned to Figure 3 applies. Favorably the additional penetration loss can be utilized to reduce the interference from inside area 39 to outside area 40 and thus the re-use area 40 can be enlarged. Instead of a DAS 38 shown in Figure 5, a single indoor antenna might be used. The DAS 38 might be passive (e.g. coax. cable) or active (e.g. radio over fiber). Knowing the location of the repeater 21 allows a careful alignment of the beam pattern 22 of the smart antenna 36.

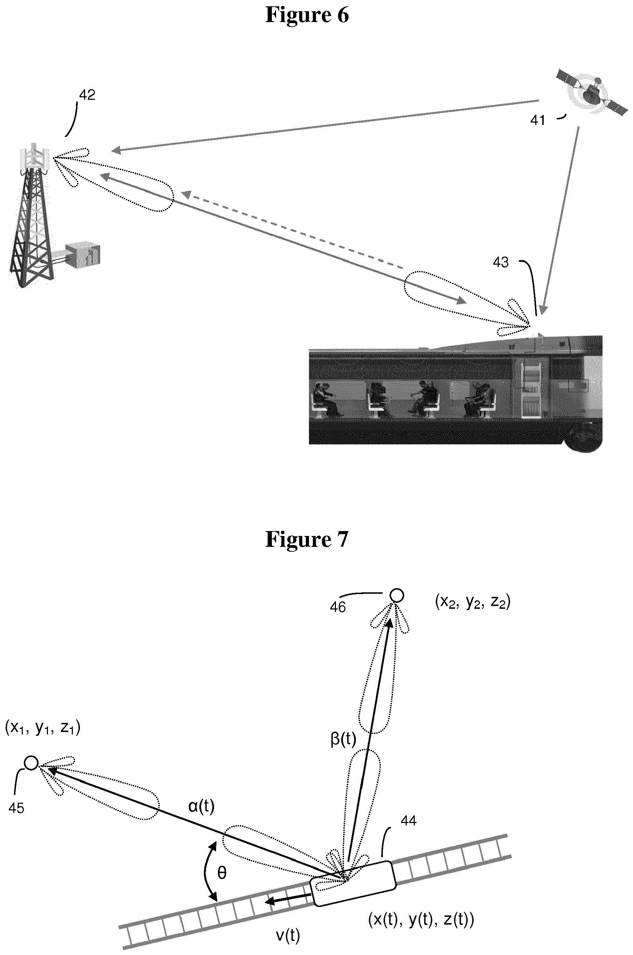

For moving shielded cells, like trains, buses, cars or trucks etc., as depicted in Figures 6 and 7 it might be advantageous to utilize the current GPS location data provided via satellite 41. Knowing the location of the donor site 42 and the location of the moving shielded cell's pick up antenna 43, both antennas can be mechanically or electrically adjusted respectively with the goal to pointing exactly to each other, i.e. along the LOS. Particularly, the moving location of the mobile repeater 21 is reported back to the donor site. Additionally, a RSSI monitoring helps to align the beam patterns in case of NLOS. A GPS based beam steering effectively could improve the SNIR. As shown in Figures 6 and Figure 7 by focusing the transmit power or bundling the receive power (in advance) into an a-priori known direction will improve the link balance.

Directional antennas at both ends of the radio link may be the best solution to obtain the maximum benefit. To be able to steer the BTS antenna 35, 42 towards the mobile antenna 36, 43 the respective GPS information is reported back. However due to field strength restrictions as mentioned above it might be that the BTS cannot be equipped with directional antennas 35 or 42. Thus the mobile system's pick-up antenna directivity has to compensate for both sides, releasing the mobile from reporting its location. It also would be possible to offload the tracking of mobile users to a dedicated donor repeater located at the BTS site 42. This approach would provide two advantages. The BTS could take care about its primary users in its own coverage cell. Secondly the repeater, usually operating at lower RF power, could implement beam steering without violating the EIRP requirements.

Not all communication services and/or operators might be located at the same mast/location. Knowing their location (in particular their geographical location) and their carrier frequencies, multiple beams could also be established optimizing the SNIR for each service individually. A schematic drawing is depicted in Figure 7. By monitoring the change in length over time of the vectors pointing from the mobile vehicle 44 towards the BTS(s) 45, 46 for each service, showing at angles $\alpha(t)$ and $\beta(t)$ respectively, the relative speed between the vehicle and its repeater and the respective BTS 45, 46 can be determined. Consequently, the spectral misalignment according to the Doppler shift can be compensated by shifting the local oscillators used in digital repeaters as a function of the determined relative speed. In case the mobile vehicle 44 is approaching the BTS 45 the incoming signal frequency has to be shifted down and the outgoing signal frequency has to be shifted up. When departing from BTS 46 signal shifting has to be applied the other way around.

For load balancing reasons it may be advantageous to separate the down-link traffic from the up-link traffic, i.e. routing the signals to different locations. Assuming BTS 45 to be fully loaded with up-link traffic with smart antennas it may be possible to direct the up-link traffic to BTS 46 and vice-versa.

So far line of sight (LOS) aspects has been taken into account. It should be noted that in case of non line of sight (NLOS) conditions, the direct vector towards a BTS might not be the best choice for the communication link. To avoid complex beam forming algorithms for these scenarios, e.g. inside a tunnel, data obtained during calibration test might be stored in location (of the repeater) related look up tables.

Interpreting the two BTS's 45, 46 as depicted in Figure 7 as belonging to one service, e.g. two adjacent cells, it is obvious how the handover could be enhanced. At a certain location the antenna beam(s) is switched from one serving cell 46 to the next serving cell 45.

The used repeater can be an amplify-and-forward as well as a decode-and-forward type. It is neither limited to an on-frequency nor to a frequency shifting type. The shown donor and coverage links can comprise multiple antennas for MIMO streams with or without different polarizations. The radio link can be a line-of-sight (LOS) or a non-line-of-sight (NLOS) connection. Any communication standard (2G, 3G, 4G) and any duplex mode (FDD or TDD) can be used.

To improve the performance of repeater systems, the idea disclosed utilizes steerable directional antennas. Antenna steering could be realized mechanically or electronically. The antenna gain could be achieved by multiple antenna elements or any other aperture based structure, e.g. dish antenna. By utilizing a large aperture or combining the responses of individual antenna elements of an array, a narrow beam can be formed with substantially increasing the gain in the desired direction and decreasing the gain in the remaining directions. This has the benefit of increasing the SNIR by increasing the signal level of the desired signal and reducing the signal level of the interfering signals.

The use of an antenna array has additionally the following beneficial features. When the combining of the antenna responses is done digitally, several beams can be formed which could, for example, be used to enhancing the RF link between multiple bases stations simultaneously. With the appropriate RF hardware, a single antenna array could be used to generate separate beam for uplink and downlink simultaneously. In addition to steering a beam in the direction that enhances the reception of the desired signal, a null can be formed to reject the signal from an interfering source when digital combining of the antenna responses is utilized. A null has significantly more rejection than would be possible with a conventional directional antenna and can offer significant SINR increases over beam steering alone. With the antenna array signal processing being performed digitally, the array pattern can be adapted very quickly to facility the rapidly changing location for the mobile repeater system. An antenna array supports space-time processing used in MIMO systems. Individual beams for each type of wireless air-interface standards can be formed.

For the above reasons along with cost and reliability concerns, it is envisioned that the array signal processing could be performed digitally. The idea disclosed however is not restricted to such an embodiment.

Beam forming is a well-developed technology that has been in use for many years, and any number of algorithms could be used in this idea disclosed. One implementation could use blind beam forming, where the algorithm is able to steer the beam based on the signal characteristics of the received signal. As an alternative to a blind adaptive beam former, a directed beam former could be used. In this case, the bearing angle between the antenna array and the base station is determined and then a beam is directed in this direction. There are several methods for determining the bearing angle two of which are described below.

The bearing angle can be determined by using a direction finding algorithm. Direction finding is a robust algorithm that determines the bearing angle of a signal impinging on an array using only the received signals but without specific knowledge of the signal types.

Alternatively or even additionally, the bearing angle can be computed from the geographic location of the repeater, the geographic location of the base station and the spatial orientation of the antenna array. The geographic location of the repeater can be determined by a variety of techniques such as GPS, Inertial Navigation System (INS) and others. The spatial orientation of the antenna can be determined, for example, through the use of INS or a digital compass and the location of the antenna in the vehicle. Finally, the location of a target base station can be determined by decoding coordinates which are transmitted by the base station or decode identifying information transmitted by the base station and then determine the location from a database containing the geographic coordinates corresponding to this information. It can also use the current location of the repeater to index into a database to find the locations of base stations within the range of the repeater.

As a variation on the second method, the geographic location of the base station could be determine by defining a set of geographic areas (zones), in which each geographic area would have one or more target base stations and their geographic coordinates. When the repeater was in a particular zone, a beam to each identified (predetermined) base station would be formed based on the location of the repeater and the base station. This beam would move to track the base station as the repeater moved. When the repeater crosses from one zone to the next, the beam could be directed to the new target cell, or it could bring up a second beam, where the gain of the second beam was increased and the first beam was decreased to facilitate the handoff of any calls in progress while moving between the two base stations. Another method that can work in some cases is to widen the beam so both base stations can hear the UL signals. This process could take place independently in multiple bands and within a band (different beams could be directed to different base stations).

Additionally, the repeater could steer two beams to two base stations using the same spectrum. This would be treated as two different sectors by the repeater, and could be retransmitted on the mobile side to two different antennas. If the repeater was driving a DAS system, the DAS could treat these as separate sectors and send each sector to two different sets of remote antennas, each using the same spectrum. This could be done for multiple base stations. This process can be done independently in different bands, and different subsets of each band. Typically this would be done for each licensed operator. This could also be accomplished.

In addition to receiving signals from base stations, steerable antennas can allow better isolation between the donor-side antennas and mobile-side antenna. This can be accomplished by adjusting the beam so the path loss between the two antennas is increased.

Repeaters are referred to in this disclosure, but this should be understood to include all types of RF distribution equipment that use off-the-air pickup from base stations or other devices, including distributed antenna systems that use off-air pickup.

**Claims**

1. A repeater (1, 21, 29, 30, 32, 33, 34) for a wireless communication network, the repeater (1, 21, 29, 30, 32, 33, 34) comprising a donor side (3), a coverage side (6), a control unit (8, 11, 12) and a signal line between the donor side (3) and the coverage side (6) for repeating a downlink-signal from the donor side (3) to the coverage side (6) and for repeating an uplink-signal from the coverage side (6) to the donor side (3), wherein at least at one of the donor side (3) and the coverage side (6) the signal line is coupled with an adaptive antenna (19, 23, 36, 43), wherein at least one of the beam pattern characteristics of the at least one antenna (19, 23, 36, 43) is adjustable, and wherein the control unit (8, 11,12) is configured to adjust the at least one adjustable beam pattern characteristic of the antenna (19, 23, 36, 43), wherein the repeater (1, 21, 29, 30, 32, 33, 34) further comprises signal quality measurement means (9) for indicating the signal quality of at least one received signal, wherein the control unit (8, 11, 12) is further configured to adjust the at least one of the beam pattern characteristics of the at least one antenna (19, 23, 36, 43) based on the indicated signal quality of the at least one received signal.

2. A repeater (1, 21, 29, 30, 32, 33, 34) according to any of the preceding claims,

wherein the at least one antenna (19, 23, 36, 43) is an adaptive directional antenna and wherein at least the angle beam pattern characteristic (6) of the at least one antenna (19, 23, 36, 43) is adjustable.

3. A repeater (1, 21, 29, 30, 32, 33, 34) according to any of the preceding claims, further being designed to be connected to a navigation system sensor, wherein the location data of the repeater are current location data derived from the navigation system sensor.

4. A repeater (1, 21, 29, 30, 32, 33, 34) according to claim 2 or 3 ,further comprising a modem interface port, where the control unit (8, 11,12) being further configured to provide the indicated signal quality and/or the current location data of the repeater (1, 21, 29, 30, 32, 33, 34) to a database.

5. A repeater (1, 21, 29, 30, 32, 33, 34) according to any of the preceding claims, the repeater (1, 21, 29, 30, 32, 33, 34) being further configured to receive adjustment information for the at least one of the beam pattern characteristics of the at least one antenna (19, 23, 36, 43) from a database, the received adjustment information being responsive to the location data of the repeater.

6. A repeater (1, 21, 29, 30, 32, 33, 34) according to any of the preceding claims, further comprising a frequency shifting means for shifting the frequency of the repeated signal on instruction.

7. A repeater (1, 21, 29, 30, 32, 33, 34) according to claim 6, further comprising a spectrum analyzer for analyzing the spectrum currently used for the wireless communication and/or spectral ranges outside the band allocated for mobile communication, wherein the control unit (8, 11, 12) is configured to report the analyzed spectrum information together with the current location data to a central database, for receiving from the central database a frequency band available for the wireless communication and for controlling the frequency shifting means to shift the frequencies of the repeated signals to the received frequency band.

8. A repeater (1, 21, 29, 30, 32, 33, 34) according to any of the preceding claims, further comprising means for calculating a distance to and/or the direction of at least one donor (20, 42) emitting the received down-link signal or receiving the emitted up-link signal and/or calculating a distance to and/or the direction of at least one user (5) emitting the received up-link signal or receiving the emitted down-link signal in relation to the repeater (1, 21, 29, 30, 32, 33, 34) based on location data of the at least one donor (20, 42) and based on the current location data of the repeater (1, 21, 29, 30, 32, 33, 34), wherein the means are coupled with the control unit (8, 11,12), and wherein the control unit (8, 11,12) is configured to adjust the at least one of the beam pattern characteristics of the at least one antenna (19, 36) based on the calculated distance and/or based on the calculated direction.

9. A repeater (1, 21, 29, 30, 32, 33, 34) according to one of claims 6 to 8,
wherein the control unit is further configured to control the frequency shifting means for a Doppler shift correction based on a current relative velocity to a respective donor (20, 42) and/or user (5) determined from a change of the calculated distance and/or direction in time, or based on a pilot frequency shift.

10. A repeater (1, 21, 29, 30, 32, 33, 34) according to claim 8 or 9,
wherein the control unit (8, 11,12) is further configured to compare a multiple of calculated distances and/or a multiple of calculated directions relative to a multiple of donors (20, 42, 45, 46) and/or users (5) and to adjust the at least one of the beam pattern characteristics of the at least one antenna (19, 36) in advance to an awaited next donor (20, 42, 45, 46) and/or user (5), thereby improving the handover between different donors (20, 42, 45, 46) and/or users (5).

11. A repeater (1, 21, 29, 30, 32, 33, 34) according to any of the preceding claims, wherein as the at least one antenna a multiple beam antenna, in particular an antenna array, is comprised.

12. A repeater (1, 21, 29, 30, 32, 33, 34) according to claim 11,
wherein the control unit (8, 11,12) is further configured to adjust the at least one adjustable beam pattern characteristic of the multiple beam antenna for each of the multiple beams separately.

13. A wireless communication network comprising at least one repeater (21, 29, 30, 32, 33, 34) according to any of the preceding claims and a base station (20, 42, 45, 46), wherein the base station (20, 42, 45, 46) comprises a third adaptive antenna (35) for receiving the uplink-signal from the repeater (1, 21, 29, 30, 32, 33, 34) and/or for emitting the downlink-signal to the repeater (1, 21, 29, 30, 32, 33, 34), wherein at least one of the beam pattern characteristics of the third antenna (35) is adjustable, and wherein the base station (20, 42, 45, 46) is configured to receive the location data of the repeater (1, 21, 29, 30, 32, 33, 34) and to adjust the at least one adjustable beam pattern characteristic of the third antenna (35) based on the location data of the repeater (1 21, 29, 30, 32, 33, 34).

14. A wireless communication network according to claim 13, wherein the base station (20, 42, 45, 46) is connected to a donor repeater (2) comprising an adaptive antenna (35) for receiving the uplink-signal from the repeater (1, 21, 29, 30, 32, 33, 34) and/or for emitting the downlink-signal to the repeater (1, 21, 29, 30, 32, 33, 34), wherein at least one of the beam pattern characteristics of the adaptive antenna (35) of the donor repeater (2) is adjustable, and wherein the donor repeater (2) is configured to receive the location data of the repeater (1, 21, 29, 30, 32, 33, 34) and to adjust the at least one adjustable beam pattern characteristic of the adaptive antenna (35) of the donor repeater (2) based on the location data of the repeater (1, 21, 29, 30, 32, 33, 34).

15. A wireless communication network comprising in a multi-hop configuration a multiple of repeaters (1, 21, 29, 30, 32, 33, 34) according to any of claims 1 to 12, each repeater having the signal line coupled at the donor side (3) with a first adaptive antenna (20, 36) and coupled at the coverage side (6) with a second adaptive antenna.

# Figure 1

# Figure 2

a)

b)

# Figure 3

# Figure 4

Figure 5

# Figure 6

# Figure 7

Europäisches
Patentamt

European
Patent Office

Office européen
des brevets

# EUROPEAN SEARCH REPORT

Application Number

EP 19 15 8708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/297937 A1 (KIM DUK-YONG [KR]) 25 November 2010 (2010-11-25) * paragraphs [0033] - [0038], [0041], [0053] - [0054], [0059], [0068] - [0069], [0087] - [0089]; figure 4 * ----- | 1-15 | INV. H04B7/155 |
| X | US 6 009 124 A (SMITH JAMES P [US] ET AL) 28 December 1999 (1999-12-28) * abstract; figures 1-4 * * column 3, line 38 - column 5, line 38 * ----- | 1,2,13 | |
| X | WO 2013/058673 A1 (LTD LIABILITY COMPANY RADIO GIGABIT [RU] ET AL.) 25 April 2013 (2013-04-25) * page 15, line 13 - page 17, line 9; figures 4-5 * ----- | 1,2,13 | |
| A | EP 2 234 290 A2 (FUJITSU LTD [JP]) 29 September 2010 (2010-09-29) * paragraphs [0015] - [0018] * ----- | 9 | |

TECHNICAL FIELDS SEARCHED (IPC)

H04B
H01Q

The present search report has been drawn up for all claims

| Place of search | Date of completion of the search | Examiner |
|---|---|---|
| Munich | 10 May 2019 | Staeger, Rainer |

EPO FORM 1503 03.82 (P04C01)

## ANNEX TO THE EUROPEAN SEARCH REPORT
## ON EUROPEAN PATENT APPLICATION NO.

EP 19 15 8708

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2019

| Patent document cited in search report | | Publication date | Patent family member(s) | | Publication date |
|---|---|---|---|---|---|
| US 2010297937 | A1 | 25-11-2010 | JP 5095826 B2<br>JP 2011503998 A<br>KR 20090046579 A<br>US 2010297937 A1<br>WO 2009061136 A2 | | 12-12-2012<br>27-01-2011<br>11-05-2009<br>25-11-2010<br>14-05-2009 |
| US 6009124 | A | 28-12-1999 | AU 8147698 A<br>BR 9812668 A<br>CN 1279853 A<br>EP 1020055 A1<br>TW 395098 B<br>US 6009124 A<br>WO 9916221 A1 | | 12-04-1999<br>22-08-2000<br>10-01-2001<br>19-07-2000<br>21-06-2000<br>28-12-1999<br>01-04-1999 |
| WO 2013058673 | A1 | 25-04-2013 | RU 2014120000 A<br>US 2014227966 A1<br>WO 2013058673 A1 | | 27-11-2015<br>14-08-2014<br>25-04-2013 |
| EP 2234290 | A2 | 29-09-2010 | EP 2234290 A2<br>JP 5453875 B2<br>JP 2010233091 A<br>US 2010248614 A1 | | 29-09-2010<br>26-03-2014<br>14-10-2010<br>30-09-2010 |

EPO FORM P0459

For more details about this annex : see Official Journal of the European Patent Office, No. 12/82

## REFERENCES CITED IN THE DESCRIPTION

### Patent documents cited in the description

- US 20080225931 A1
- US 20100234071 A1
- US 20100284446 A1

### Non-patent literature cited in the description

- **G. J. FOSCHINI ; M. J. GANS.** On limits of wireless communications in a fading environment when using multiple antennas. *Wireless Personal Communication,* March 1998, vol. 6, 311-335
- **M. MÜCK et al.** ETSI reconfigurable radio systems: status and future directions on software defined radio and cognitive radio standards. *IEEE Communications Magazine,* September 2010, 78-86
- **ANDERS FURUSKÄR ; SARA MAZUR ; FRANK MÜLLER ; HÅKAN OLOFSSON.** EDGE: Enhanced data rates for GSM and TDMA/136 evolution. *IEEE Personal Communications,* June 1999, vol. 6, 56-66
- **S. CATREUX et al.** Adaptive Modulation and MIMO Coding for Broadband Wireless Data Networks. *IEEE Communications Magazine,* June 2002, 108-115
- **Y. ZHANG et al.** Auction-Based Resource Allocation in Cognitive Radio Systems. *IEEE Communications Magazine,* November 2012, 108-129
- **BRAZ, O. et al.** LTE amplify and forward relay for indoor coverage extension. *Funkschau Heft,* 07 April 2009